# EUROPÄISCHE PATENTSCHRIFT

(11) **EP 2 570 352 B1**
(45) Veröffentlichungstag und Bekanntmachung des Hinweises auf die Patenterteilung: **21.08.2013**
(21) Anmeldenummer: 11181042.0
(22) Anmeldetag: 13.09.2011
(51) Int. Cl.: B65B 61/22

(54) **Verfahren zum Einfügen von Baumwollbäuschen in Behälter**
Method for inserting cotton wool dabbers into containers
Procédé d'introduction de tampons en coton dans des récipients

(43) Veröffentlichungstag der Anmeldung: 20.03.2013
(73) Patentinhaber: UHLMANN PAC-SYSTEME GmbH & Co. KG, 88471 Laupheim (DE)
(72) Erfinder: Gertitschke, Detlev, 88471 Laupheim (DE); Kronawitter, Michael, 89179 Beimerstetten (DE)
(74) Vertreter: Wächter, Jochen

(56) Entgegenhaltungen:
- GB-A- 736 979
- US-A- 2 805 531
- US-A- 2 810 245
- US-A- 3 030 748
- US-A- 3 031 350

## Beschreibung

Die Erfindung betrifft ein Verfahren zum Einfügen von Baumwollbäuschen in Behälter.

In der pharmazeutischen Industrie werden pharmazeutische Produkte oftmals in flaschen- oder dosenförmige Behältern abgefüllt. Vor dem Verschließen der Behälter werden dabei zum Schutz der Produkte häufig Baumwollbäusche oder -stränge auf die Produkte gelegt. Besonders bei teilgefüllten Behältern ist dies gebräuchlich. Da die Baumwollstränge je nach zu füllendem Volumen sehr lang sein können, wirkt sich die Funktion des Einfügens der Baumwollbäusche aufgrund der langen Hübe oft leistungshemmend aus.

Der vorliegenden Erfindung liegt daher die Aufgabe zugrunde, ein Verfahren zum Einfügen von Baumwollbäuschen in Behälter zu schaffen, mit dem hohe Taktzahlen bei gleichzeitiger sicherer Befüllung erzielt werden können.

Diese Aufgabe wird durch die Merkmale des Anspruchs 1 gelöst.

Erfindungsgemäß weist das Verfahren zum Einfügen von Baumwollbäuschen in Behälter folgende Schritte auf:
- Bereitstellen einer Bauschtransporteinheit, die mindestens zwei Drehsterne mit jeweils mindestens drei Bauschhaltern aufweist, wobei die mindestens zwei Drehsterne versetzt zueinander um dieselbe Drehachse drehbar angeordnet sind und jeweils von einem separaten Antriebsmittel angetrieben werden;
- getaktetes Drehen der mindestens zwei Drehsterne, wobei jedem Bauschhalter an einer Bauschaufnahmeposition ein Bausch zugeführt wird und jeder mit dem Bausch versehene Bauschhalter zu einer Bauschabgabeposition weiterbewegt wird;
- getaktetes Bereitstellen von mindestens drei linear in Reihe angeordneten, mit Produkten zumindest teilweise gefüllten Behältern;
- horizontales Versetzen mindestens eines der mindestens drei Bauschhalter jedes Drehsterns während der Drehung des Drehsterns derart, dass die mindestens drei Bauschhalter jedes Drehsterns in ihrer Bauschabgabeposition linear in Reihe angeordnet sind; und
- Überführen der durch die mindestens drei in der Bauschabgabeposition befindlichen Bauschhalter gehaltenen Bäusche in die mindestens drei bereitgestellten Behälter.

Mit diesem Verfahren ist es möglich, eine Befüllung von Behältern mit Baumwollbäuschen mit einer hohen Taktzahl zu erzielen, wobei gleichzeitig ein sicherer und wenig anfälliger Betrieb gewährleistet wird.

Vorzugsweise wird jeder Bauschhalter im Bereich um seine Bauschaufnahmeposition auf einer gekrümmten Bahn bewegt. Bevorzugt ist die gekrümmte Bahn dabei ein Kreisabschnitt. Bei dieser Geometrie können die Bauschaufnahmepositionen auf einfache Weise durch Drehung des gesamten Drehsterns erreicht werden, ohne dass zusätzliche Hilfsmittel notwendig sind.

In einer bevorzugten Ausführungsform ist nur eine Bauschaufnahmeposition für sämtliche Bauschhalter vorgesehen, und jeder Bauschhalter wird an dieser einen Bauschaufnahmeposition mit dem Bausch versehen. Dadurch werden zwar erhöhte Anforderungen an die Geschwindigkeit und den Antrieb der Drehsterne gestellt, allerdings wird der konstruktive Aufwand zum "Befüllen" jedes Bauschhalters durch die Beschränkung auf eine Füllposition reduziert.

Das horizontale Versetzen des mindestens einen Bauschhalters erfolgt vorzugsweise mechanisch zwangsgeführt. Auf diese Weise kann die lineare Anordnung der Bauschhalter in ihrer Bauschabgabeposition erzielt werden, ohne dass ein weiterer Antrieb notwendig ist.

In einer besonders bevorzugten Ausführungsform weist die Bauschtransporteinheit eine feststehende Kurvenscheibe auf, auf der eine mit dem zu versetzenden Bauschhalter verbundene Rolle geführt wird, und ein Federelement hält die Rolle gegen die Kurvenscheibe. Somit wird der zu versetzende Bauschhalter auf einfache Weise nur aufgrund der Drehung des Drehsterns an die gewünschte Position gebracht.

Vorzugsweise ist die Kurvenscheibe hierbei als Kreisscheibe ausgebildet ist, die exzentrisch zur Drehachse der Drehsterne versetzt ist. Mit einer derartigen einfachen Gestaltung gelingt es bereits, im Bereich der Bauschabgabepositionen eine lineare Anordnung der Bauschhalter zu erzielen, während im Bereich der Bauschaufnahmepositionen die Bauschhalter eine nicht-lineare Anordnung zueinander zeigen.

Im Sinne einer einfachen Lagerung kann der zu versetzende Bauschhalter an einem Arm angeordnet sein, der wiederum schwenkbar an einem starren Arm eines anderen Bauschhalters desselben Drehsterns gelagert ist.

Die Leistungsfähigkeit des beanspruchten Verfahrens wird dann maximal genutzt, wenn das Überführen der durch die mindestens drei in der Bauschabgabeposition befindlichen Bauschhalter gehaltenen Bäusche in die mindestens drei bereitgestellten Behälter gleichzeitig erfolgt.

Für eine hochpräzise und belastungsfähige Einstellung des Geschwindigkeitsverlaufs der Drehsterne sind die separaten Antriebsmittel vorzugsweise Servomotoren.

In einer bevorzugten Ausführungsform durchläuft jeder Drehstern zeitlich versetzt dieselbe Geschwindigkeitskurve, wobei die Geschwindigkeit des Drehsterns bei jeder Bauschaufnahme und Bauschabgabe Null ist. Dies vereinheitlicht die Bewegungen des Gesamtsystems und vereinfacht die Programmierung der einzelnen Antriebsmittel.

In einer besonders bevorzugten Ausführungsform weist die Bauschtransporteinheit genau zwei Drehsterne auf, die jeweils genau drei Bauschhalter aufweisen. Dabei wird lediglich der mittlere zweite der drei Bauschhalter jedes Drehsterns horizontal in Richtung seiner Bauschabgabeposition versetzt. Auf diese Weise wird besonders einfach die lineare Anordnung der drei Bauschhalter jedes Drehsterns in ihrer Bauschabgabeposition erzielt.

In einem solchen Fall ist es bevorzugt, dass im Bereich der Bauschaufnahmeposition der Winkelabstand zwischen dem ersten und dem zweiten Bauschhalter eines Drehsterns ungleich dem Winkelabstand zwischen dem zweiten und dem dritten Bauschhalter des Drehsterns ist. Mit anderen Worten wird somit eine asymmetrische Anordnung der Bauschhalter im Bereich ihrer Bauschaufnahmepositionen geschaffen, die durch Verschwenkung des mittleren Bauschhalters in eine symmetrische Anordnung der Bauschhalter im Bereich ihrer Bauschabgabepositionen umgewandelt wird.

Weitere Vorteile und Merkmale der vorliegenden Erfindung ergeben sich aus der nachfolgenden Beschreibung unter Bezugnahme auf die Zeichnungen.
- Fig. 1: ist eine Ansicht von unten auf eine Ausführungsform einer Bauschtransporteinheit, mit der das erfindungsgemäße Verfahren durchgeführt werden kann;
- Fig. 2: ist eine Frontansicht der Bauschtransporteinheit aus Fig. 1 mit entsprechenden Vorrichtungen zum Bestücken und Entleeren der Bauschhalter; und
- Fig. 3: ist ein Graph, der die Geschwindigkeitsverhältnisse der Drehsterne der Bauschtransporteinheit aus Fig. 1 während eines Umlaufs um die Drehachse zeigt.

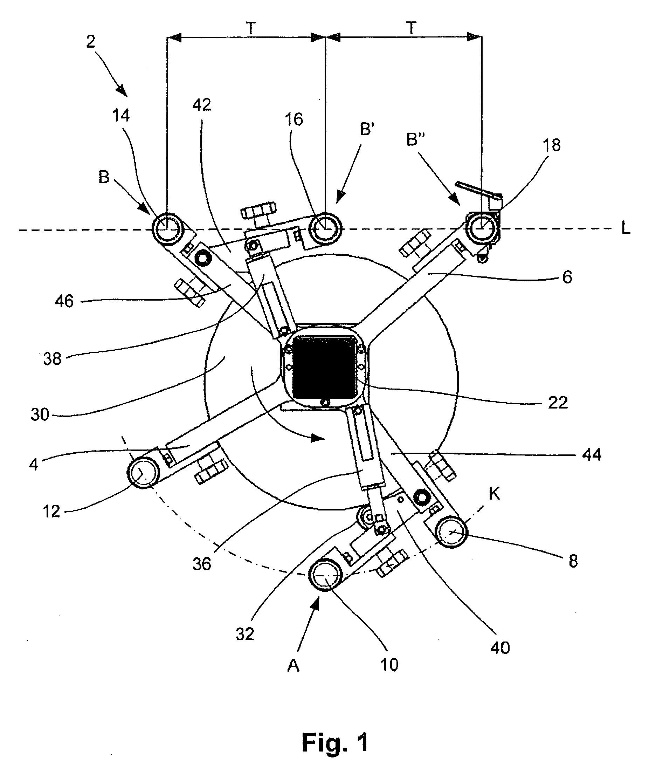

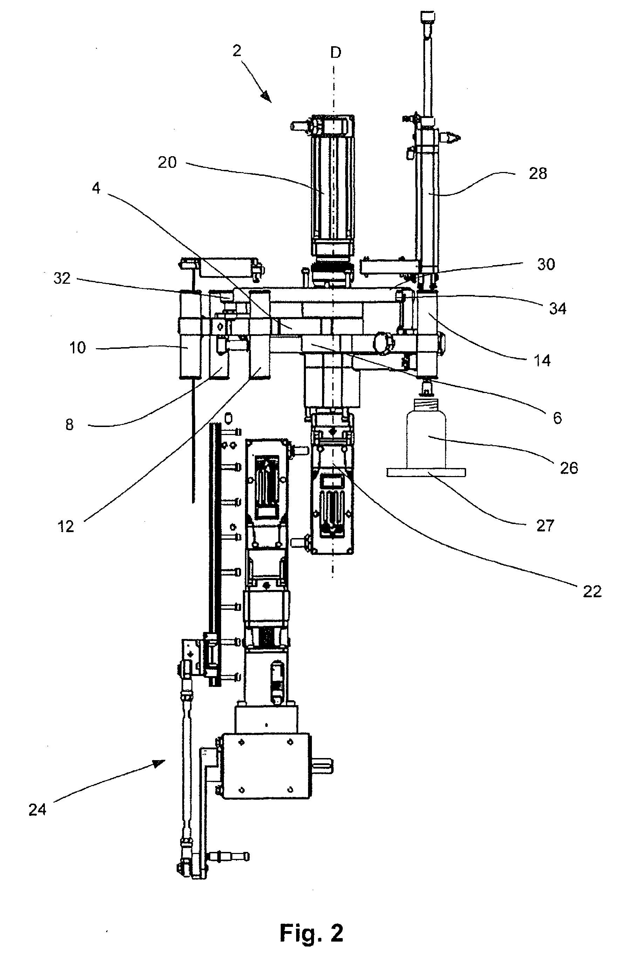

In Fig. 1 und 2 ist eine Ausführungsform einer Bauschtransporteinheit 2 von unten bzw. in Frontansicht dargestellt, die zum erfindungsgemäßen Einfügen von Baumwollbäuschen bzw. -strängen in Behälter verwendet werden kann. Die Bauschtransporteinheit 2 umfasst im dargestellten Beispielsfall einen ersten Drehstern 4 und einen zweiten Drehstern 6, welche beide um dieselbe Drehachse D (Fig. 2) in Richtung des Pfeils (Fig. 1) drehbar sind. Es können aber auch mehr als zwei Drehsterne 4, 6 vorgesehen sein.

Der erste Drehstern 4 weist drei Bauschhalter 8, 10, 12 auf, die in einem Abstand zueinander angeordnet sind, wobei die beiden äußeren Bauschhalter 8, 12 einen Winkelbereich von 90-110° einschließen. Ebenso weist der zweite Drehstern 6 drei Bauschhalter 14, 16, 18 auf, die in einem Abstand zueinander angeordnet sind, wobei die beiden äußeren Bauschhalter 14, 18 einen Winkelbereich von 90-110° einschließen. Es können auch mehr als drei Bauschhalter pro Drehstern 4, 6 vorgesehen sein, und die von den beiden äußeren Bauschhaltern überdeckten Winkelbereiche können auch größer oder kleiner als der angegebene Bereich sein.

In der dargestellten Ausführungsform sind alle Bauschhalter 8, 10, 12, 14, 16, 18 als Röhrchen ausgebildet, in welche Baumwollbäusche (nicht dargestellt) zum Weitertransport eingefügt und wieder herausgeschoben werden. Es sind aber auch viele andere Formen für die Bauschhalter 8, 10, 12, 14, 16, 18 denkbar, die aus dem Stand der Technik bekannt sind. Der erste Drehstern 4 und der zweite Drehstern 6 werden durch separate Antriebsmittel 20, 22 angetrieben. Vorzugsweise sind die Antriebsmittel 20, 22 Servomotoren und ragen, wie in Fig. 2 ersichtlich ist, nach oben und unten von den beiden Drehsternen 4, 6 ab. Im Betrieb der Bauschtransporteinheit 2 wird nun jedem Bauschhalter 8, 10, 12, 14, 16, 18 an einer zugehörigen Bauschaufnahmeposition A ein Bausch zugeführt, beispielsweise wie in Fig. 2 dargestellt mittels eines Kurbelantriebs 24. Für dieses Einführen der Baumwollbäusche bzw. -stränge in die Bauschhalter 8, 10, 12, 14, 16, 18 existiert eine ganze Reihe von bekannten Technologien, die hier nicht näher aufgeführt werden sollen, aber allesamt anwendbar sind. Im dargestellten Beispielsfall ist die Bauschaufnahmeposition A für jeden Bauschhalter 8, 10, 12, 14, 16, 18 identisch. Mit anderen Worten bedeutet dies, dass jeder der sechs Bauschhalter 8, 10, 12, 14, 16, 18 der beiden Drehsterne 4, 6 an diesem Punkt A zum Stillstand kommen muss und mittels immer derselben Vorrichtung an dieser Stelle befüllt wird. Ebenso wäre es möglich, dass für verschiedene Bauschhalter verschiedene Bauschaufnahmepositionen A existieren. In diesem Fall müssten mehrere parallele Zuführvorrichtungen für das Einfügen der Baumwollbäusche in die Bauschhalter vorliegen.

Im Bereich der Bauschaufnahmeposition A wird jeder Bauschhalter 8, 10, 12, 14, 16, 18 auf einer gekrümmten Bahn, vorzugsweise einem Kreisabschnitt K, bewegt. Im Bereich der Bauschaufnahmeposition A und um diese herum ist der Winkelabstand zwischen dem ersten Bauschhalter 8 und dem zweiten Bauschhalter 10 des ersten Drehsterns 4 ungleich dem Winkelabstand zwischen dem zweiten Bauschhalter 10 und dem dritten Bauschhalter 12 des ersten Drehsterns 4. Dasselbe gilt für die Bauschhalter 14, 16, 18 des zweiten Drehsterns 6. Allerdings befinden sich alle drei Bauschhalter 8, 10, 12 auf demselben Kreisabschnitt K. Für die Bauschhalter 14, 16, 18 des zweiten Drehsterns 6 gilt Entsprechendes.

Die beiden Drehsterne 4, 6 werden also jeweils getaktet gedreht, wobei jedem Bauschhalter 8, 10, 12, 14, 16, 18 an einer Bauschaufnahmeposition A ein Bausch zugeführt wird und jeder mit dem Bausch versehene Bauschhalter 8, 10, 12, 14, 16, 18 zu einer Bauschabgabeposition B, B', B" weiterbewegt wird, wo bei Stillstand des Drehsterns 4, 6 die durch die in der Bauschabgabeposition B, B', B" befindlichen Bauschhalter 8, 10, 12, 14, 16, 18 gehaltenen Bäusche in drei bereitgestellte Behälter 26 eingeführt werden. Die Anzahl der Bauschabgabepositionen B, B', B" und Behälter 26 ist selbstverständlich variabel und mit der Anzahl von Bauschhaltern 8, 10, 12 bzw. 14, 16, 18 eines Drehsterns 4 bzw. 6 korreliert. In der dargestellten bevorzugten Ausführungsform sind die Bauschabgabepositionen B, B', B" für die Bauschhalter der beiden Drehsterne 4, 6 identisch.

Die Behälter 26 sind zum Zeitpunkt der Befüllung mit den Baumsollbäuschen in der Regel zumindest teilweise mit pharmazeutischen Produkten gefüllt und linear in Reihe angeordnet. Sie werden von einer hier nicht näher beschriebenen Transportvorrichtung 27, etwa einem Transportband, einer Kette oder anderen bekannten Transportmitteln, aufrecht stehend und getaktet an den Bauschabgabepositionen B, B', B" vorbeigeführt. Das Überführen der Bäusche in die bereitgestellten Behälter 26 erfolgt dabei vorzugsweise an allen drei Bauschabgabepositionen B, B', B" simultan, im dargestellten Beispielsfall mittels dreier Pneumatikzylinder 28, welche die Baumwollbäusche aus den Bauschhaltern 8, 10, 12, 14, 16, 18 nach unten in die Behälter 26 schieben. Wichtig ist hierbei, dass die drei Bauschhalter 14, 16, 18 bzw. 8, 10, 12 jedes Drehsterns 4, 6 in ihrer Bauschabgabeposition B, B', B" linear in Reihe angeordnet sind. Die durch die drei Bauschabgabepositionen B, B', B" gebildete gerade Linie ist in Fig. 1 mit L gekennzeichnet. In diesen Positionen weisen die drei Bauschhalter 14, 16, 18 bzw. 8, 10, 12 denselben Abstand T zueinander auf wie die unter ihnen angeordneten Behälter 26.

Um dies zu erreichen, wird der mittlere zweite Bauschhalter 10, 16 eines jeden Drehsterns 4, 6 während der Drehung des Drehsterns 4, 6 in Richtung seiner Bauschabgabeposition B' derart horizontal versetzt, im vorliegenden Beispielsfall also nach innen, dass die lineare Ausrichtung der drei Bauschhalter 8, 10, 12 bzw. 14, 16, 18 entlang Linie L für die Bauschübergabe an die Behälter 26 erzielt wird. Dieses horizontale Versetzen kann auch einen anderen oder mehrere Bauschhalter betreffen, insbesondere dann, wenn mehr als drei Bauschhalter pro Drehstern 4, 6 vorgesehen sind.

Im dargestellten Beispielsfall erfolgt das horizontale Versetzen des jeweils zweiten Bauschhalters 10, 16 mechanisch zwangsgeführt. Es sind aber auch andere Möglichkeiten denkbar, wie das horizontale Versetzen konstruktiv umgesetzt werden kann. Im dargestellten Beispielsfall wird die mechanische Zwangsführung durch eine ortsfeste Kurvenscheibe 30 erzeugt, deren innerer Kurvenabschnitt bzw. innere Totlage im Bereich der Bauschabgabepositionen B, B', B" und deren äußerer Kurvenabschnitt bzw. äußere Totlage im Bereich der Bauschaufnahmeposition A liegt. Mit anderen Worten ist die Kurvenscheibe 30 als Kreisscheibe ausgeführt, die exzentrisch zur Drehachse D der Drehsterne 4, 6 versetzt ist. Auf dieser Kurvenscheibe 30 ist eine mit dem zu versetzenden Bauschhalter 10, 16 verbundene Rolle 32, 34 geführt. Ein Federelement 36, 38 hält bzw. drückt die entsprechende Rolle 32, 34 jeweils gegen die Kurvenscheibe 30. Selbstverständlich sind auch andere Formen der Kurvenscheibe 30 denkbar.

In der vorliegend dargestellten konstruktiven Ausgestaltung ist der jeweils zu versetzende Bauschhalter 10, 16 an einem Arm 40, 42 angeordnet, der schwenkbar an einem starren Arm 44, 46 eines anderen Bauschhalters, hier des jeweils ersten Bauschhalters 8, 14 eines jeden Drehsterns 4, 6, gelagert ist. Die Schwenkachse des Arms 40, 42 um den starren Arm 44, 46 liegt dabei radial außerhalb des Umfangs der Kurvenscheibe 30. Das Federelement 36, 38 ist an seinem einen Ende mit dem jeweiligen schwenkbaren Arm 40, 42 und an seinem anderen Ende nahe der Drehachse D der Drehsterne 4, 6 mit dem starren Arm 44, 46 verbunden und zieht den schwenkbaren Arm 40, 42 somit nach innen gegen die Mantelfläche der Kurvenscheibe 30. Aufgrund der Exzentrizität der Kurvenscheibe 30 wird der schwenkbare Arm mit dem mittleren Bauschhalter 10, 16 also im Bereich der Bauschabgabeposition B' nach innen geschwenkt (so dass der mittlere Bauschhalter 10, 16 mit den beiden anderen Bauschhaltern 8, 12 bzw. 14, 18 eine Linie L bildet), während er im Bereich der Bauschaufnahmeposition A nach außen geschwenkt wird (und der mittlere Bauschhalter 10, 16 somit mit den jeweils beiden anderen Bauschhaltern 8, 12 bzw. 14, 18 des jeweiligen Drehsterns 4, 6 entlang eines Kreisabschnitts K angeordnet ist).

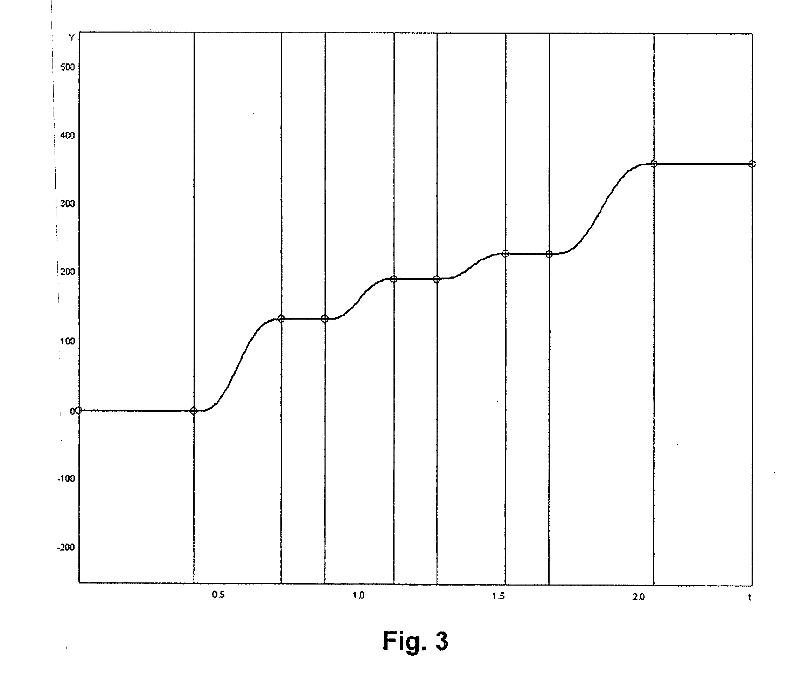

In Fig. 3 ist eine mögliche Drehwinkelkurve (Drehwinkel Y über Zeit t) für einen Drehstern 4, 6 bei einer Drehung in Richtung der Transportrichtung der Behälter dargestellt. Dabei durchläuft jeder Drehstern 4, 6 zeitlich versetzt dieselbe Drehwinkelkurve. Der zeitliche Versatz ist dabei vorzugsweise die Hälfte der Zeit für einen Zyklus. Deutlich erkennt man, dass die Wnkelgeschwindigkeit des Drehsterns 4, 6 bei der Bauschaufnahme (siehe die drei mittleren kleinen Plateaus) und der Bauschabgabe (siehe das Zyklus-übergreifende große Plateau rechts oben und links unten) Null ist und somit der Drehwinkel Y unverändert bleibt, während zwischen den jeweiligen Stopppunkten bzw. Rasten unterschiedliche Drehwinkelprofile vorliegen (sog. "Rast-in-Rast"-Bewegungsprofil). Die Drehwinkelkurven der Drehsterne 4, 6 können sich vom dargestellten Profil unterscheiden, wobei immer die Anzahl und Form der Drehsterne 4, 6, die Anzahl und Anordnung der Bauschhalter 8, 10, 12, 14, 16, 18, die Anzahl und Anordnung von Bauschaufnahmepositionen A und die Anordnung der Bauschabgabepositionen B, B', B" zu berücksichtigen sind.

## Patentansprüche

1. Verfahren zum Einfügen von Baumwollbäuschen in Behälter (26), mit folgenden Schritten:
- Bereitstellen einer Bauschtransporteinheit (2), die mindestens zwei Drehsterne (4, 6) mit jeweils mindestens drei Bauschhaltern (8, 10, 12, 14, 16, 18) aufweist, wobei die mindestens zwei Drehsterne (4, 6) versetzt zueinander um dieselbe Drehachse (D) drehbar angeordnet sind und jeweils von einem separaten Antriebsmittel (20, 22) angetrieben werden;
- getaktetes Drehen der mindestens zwei Drehsterne (4, 6), wobei jedem Bauschhalter (8, 10, 12, 14, 16, 18) an einer Bauschaufnahmeposition (A) ein Bausch zugeführt wird und jeder mit dem Bausch versehene Bauschhalter (8, 10, 12, 14, 16, 18) zu einer Bauschabgabeposition (B, B', B") weiterbewegt wird;
- getaktetes Bereitstellen von mindestens drei linear in Reihe angeordneten, mit Produkten zumindest teilweise gefüllten Behältern (26);
- horizontales Versetzen mindestens eines (10, 16) der mindestens drei Bauschhalter (8, 10, 12, 14, 16, 18) jedes Drehsterns (4, 6) während der Drehung des Drehsterns (4, 6) derart, dass die mindestens drei Bauschhalter (8, 10, 12, 14, 16, 18) jedes Drehsterns (4, 6) in ihrer Bauschabgabeposition (B, B', B") linear (L) in Reihe angeordnet sind; und
- Überführen der durch die mindestens drei in der Bauschabgabeposition (B, B', B") befindlichen Bauschhalter (8, 10, 12, 14, 16, 18) gehaltenen Bäusche in die mindestens drei bereitgestellten Behälter (26).

2. Verfahren nach Anspruch 1, **dadurch gekennzeichnet, dass** jeder Bauschhalter (8, 10, 12, 14, 16, 18) im Bereich um seine Bauschaufnahmeposition (A) auf einer gekrümmten Bahn bewegt wird.

3. Verfahren nach Anspruch 2, **dadurch gekennzeichnet, dass** die gekrümmte Bahn ein Kreisabschnitt (K) ist.

4. Verfahren nach einem der vorangehenden Ansprüche, **dadurch gekennzeichnet, dass** nur eine Bauschaufnahmeposition (A) vorgesehen ist und jeder Bauschhalter (8, 10, 12, 14, 16, 18) an dieser einen Bauschaufnahmeposition (A) mit dem Bausch versehen wird.

5. Verfahren nach einem der vorangehenden Ansprüche, **dadurch gekennzeichnet, dass** das horizontale Versetzen des mindestens einen Bauschhalters (8, 10, 12, 14, 16, 18) mechanisch zwangsgeführt erfolgt.

6. Verfahren nach Anspruch 5, **dadurch gekennzeichnet, dass** die Bauschtransporteinheit (2) eine feststehende Kurvenscheibe (30) aufweist, auf der eine mit dem zu versetzenden Bauschhalter (10, 16) verbundene Rolle (32, 34) geführt wird, und dass ein Federelement (36, 38) die Rolle (32, 34) gegen die Kurvenscheibe (30) hält.

7. Verfahren nach Anspruch 6, **dadurch gekennzeichnet, dass** die Kurvenscheibe (30) als Kreisscheibe ausgebildet ist, die exzentrisch zur Drehachse (D) der Drehsterne (4, 6) versetzt ist.

8. Verfahren nach Anspruch 6 oder 7, **dadurch gekennzeichnet, dass** der zu versetzende Bauschhalter (10, 16) an einem Arm (40, 42) angeordnet ist, der schwenkbar an einem starren Arm (44, 46) eines anderen Bauschhalters (8, 14) desselben Drehsterns (4, 6) gelagert ist.

9. Verfahren nach einem der vorangehenden Ansprüche, **dadurch gekennzeichnet, dass** das Überführen der durch die mindestens drei in der Bauschabgabeposition (B, B', B") befindlichen Bauschhalter (8, 10, 12, 14, 16, 18) gehaltenen Bäusche in die mindestens drei bereitgestellten Behälter (26) gleichzeitig erfolgt.

10. Verfahren nach einem der vorangehenden Ansprüche, **dadurch gekennzeichnet, dass** die separaten Antriebsmittel (20, 22) Servomotoren sind.

11. Verfahren nach einem der vorangehenden Ansprüche, **dadurch gekennzeichnet, dass** jeder Drehstern (4, 6) dieselbe Geschwindigkeitskurve zeitlich versetzt durchläuft, wobei die Geschwindigkeit jedes Drehsterns (4, 6) bei Bauschaufnahme und Bauschabgabe Null ist.

12. Verfahren nach einem der vorangehenden Ansprüche, **dadurch gekennzeichnet, dass** die Bauschtransporteinheit (2) genau zwei Drehsterne (4, 6) aufweist, die jeweils genau drei Bauschhalter (8, 10, 12, 14, 16, 18) aufweisen, und dass lediglich der mittlere zweite (10, 16) der drei Bauschhalter jedes Drehsterns (4, 6) horizontal in Richtung seiner Bauschabgabeposition (B') versetzt wird.

13. Verfahren nach Anspruch 12, **dadurch gekennzeichnet, dass** im Bereich der Bauschaufnahmeposition (A) der Winkelabstand zwischen dem ersten (8, 14) und dem zweiten (10, 16) Bauschhalter eines Drehsterns (4, 6) ungleich dem Winkelabstand zwischen dem zweiten (10, 16) und dem dritten (12, 16) Bauschhalter des Drehsterns (4, 6) ist.

## Claims

1. Method for inserting cotton wads into containers (26), comprising the steps of:
- providing a wad transport unit (2), which comprises at least two star wheels (4, 6), each comprising at least three wad holders (8, 10, 12, 14, 16, 18), wherein the at least two star wheels (4, 6) are mounted rotatably about the same rotational axis (D) such that they are offset from each other, and each star wheel is driven by a separate drive means (20, 22);
- rotating the at least two star wheels (4, 6) in a clocked manner, wherein a wad is supplied to each wad holder (8, 10, 12, 14, 16, 18) in a wad-receiving position (A), and wherein each wad holder (8, 10, 12, 14, 16, 18) provided with a wad is moved onward to a wad-ejecting position (B, B', B");
- providing at least three containers (26)in a clocked manner, the containers being arranged in a straight line and being filled with products at least in part;
- horizontally shifting at least one (10, 16) of the at least three wad holders (8, 10, 12, 14, 16, 18) of each star wheel (4, 6) during the rotation of the star wheel (4, 6) in such a way that the at least three wad holders (8, 10, 12, 14, 16, 18) of each star wheel (4, 6), when in their wad-ejecting positions (B, B', B"), are arranged in a straight line (L); and
- transferring the wads held by the at least three wad holders (8, 10, 12, 14, 16, 18) into the at least three provided containers (26) while the wad holders are in their wad-ejecting positions (B, B', B").

2. Method according to claim 1, **characterised in that** each wad holder (8, 10, 12, 14, 16, 18) is moved along a curved path in the region around its wad-receiving position (A).

3. Method according to claim 2, **characterised in that** the curved path is a segment of a circle (K).

4. Method according to any of the preceding claims, **characterised in that** only one wad-receiving position (A) is provided, and each wad holder (8, 10, 12, 14, 16, 18) is provided with the wad at this one wad-receiving position (A).

5. Method according to any of the preceding claims, **characterised in that** the horizontal shifting of the at least one wad holder (8, 10, 12, 14, 16, 18) is carried out by positively driven mechanical means.

6. Method according to claim 5, **characterised in that** the wad transport unit (2) comprises a stationary cam disc (30), on which a roller (32, 34) which is connected to the wad holder (10, 16) to be shifted is guided, and **in that** a spring element (36, 38) holds the roller (32, 34) against the cam disc (30).

7. Method according to claim 6, **characterised in that** the cam disc (30) is designed as a circular disc, which is offset eccentrically from the rotational axis (D) of the star wheels (4, 6).

8. Method according to either claim 6 or claim 7, **characterised in that** the wad holder (10, 16) to be offset is mounted on an arm (40, 42), which is supported pivotably on a rigid arm (44, 46) another wad holders (8, 14) of the same star wheel (4, 6).

9. Method according to any of the preceding claims, **characterised in that**, when the at least three wad holders (8, 10, 12, 14, 16, 18) are in their wad-ejecting positions (B, B', B"), the wads held therein are transferred simultaneously into the at least three containers (26) provided.

10. Method according to any of the preceding claims, **characterised in that** the separate drive means (20, 22) are servomotors.

11. Method according to any of the preceding claims, **characterised in that** each of the star wheels (4, 6) travels along the same speed curve in a temporally offset manner, the speed of each star wheel (4, 6) being zero when receiving and ejecting the wad.

12. Method according to any of the preceding claims, **characterised in that** the wad transport unit (2) comprises exactly two star wheels (4, 6), each of which comprises exactly three wad holders (8, 10, 12, 14, 16, 18), and **in that** only the middle or second (10, 16) of the three wad holders of each star wheel (4, 6) is shifted horizontally towards the wad-ejecting position (B') thereof.

13. Method according to claim 12, **characterised in that**, in the region of the wad-receiving position (A), the angular distance between the first (8, 14) and the second (10, 16) wad holder of a star wheel (4, 6) is different from the angular distance between the second (10, 16) and the third (12, 16) wad holder of the star wheel (4, 6).

## Revendications

1. Procédé d'insertion de tampons de coton dans des récipients (26), comprenant les étapes suivantes :
- mise en place d'une unité de transport de tampons (2), qui présente au moins deux étoiles rotatives (4, 6) avec chacune au moins trois supports de tampons (8, 10, 12, 14, 16, 18), les au moins deux étoiles rotatives (4, 6) étant montées tournantes autour du même axe de rotation (D), en déport mutuel, et étant entraînées chacune par un moyen d'entraînement séparé (20, 22) ;
- rotation cadencée des au moins deux étoiles rotatives (4, 6), un tampon étant amené à chaque support de tampon (8, 10, 12, 14, 16, 18) en une position de réception de tampons (A) et chaque support (8, 10, 12, 14, 16, 18), muni du tampon, étant acheminé vers une position de distribution de tampon (B, B', B")
- mise en place cadencée d'au moins trois récipients (26), disposés linéairement en rangée et remplis au moins en partie de produits ;
- déplacement horizontal d'au moins l'un (10, 16) des au moins trois supports de tampons (8, 10, 12, 14, 16, 18) de chaque étoile rotative (4, 6) pendant la rotation de l'étoile (4, 6) de telle sorte que les au moins trois supports de tampons (8, 10, 12, 14, 16, 18) de chaque étoile rotative (4, 6) sont disposés linéairement (L) en rangée dans leur position de distribution (B, B', B" ) ; et
- transfert des tampons, maintenus par les au moins trois supports de tampons (8, 10, 12, 14, 16, 18), situés dans leur position de distribution (B, B', B"), dans les au moins trois récipients (26) mis en place.

2. Procédé selon la revendication 1, **caractérisé en ce que** chaque support de tampon (8, 10, 12, 14, 16, 18) est déplacé sur une trajectoire incurvée dans la zone périphérique à sa position de réception de tampon (A).

3. Procédé selon la revendication 2, **caractérisé en ce que** la trajectoire incurvée est un segment de cercle (K) .

4. Procédé selon l'une des revendications précédentes, **caractérisé en ce qu'**il n'est prévu qu'une position de réception de tampons (A) et chaque support de tampon (8, 10, 12, 14, 16, 18) est muni du tampon dans cette position unique de réception de tampons (A).

5. Procécé selon l'une des revendications précédentes, **caractérisé en ce que** le déplacement horizontal du au moins un support de tampon (8, 10, 12, 14, 16, 18) est à guindage forcé mécanique.

6. Procédé selon la revendication 5, **caractérisé en ce que** l'unité de transport de tampons (2) présente une came (30) stationnaire, sur laquelle est guidé un galet (32, 34) assemblé avec le support de tampon (10, 16) à déplacer, et qu'un élément à ressort (36, 38) maintient le galet (32, 34) contre la came (30).

7. Procédé selon la revendication 6, **caractérisé en ce que** la came (30) est réalisée sous forme de disque, en déport excentré par rapport à l'axe de rotation (D) des étoiles rotatives (4, 6).

8. Procédé selon l'une des revendications 6 et 7, **caractérisé en ce que** le support de tampon (10, 16) à déplacer est disposé sur un bras (40, 42), qui est monté pivotant sur un bras rigide (44, 46) d'un autre support de tampon (8, 14) de la même étoile rotative (4, 6).

9. Procédé selon l'une des revendications précédentes, **caractérisé en ce que** le transfert des tampons, maintenus par les au moins trois supports de tampons (8, 10, 12, 14, 16, 18) situés dans la position de distribution de tampons (B, B', B"), est effectué simultanément dans les au moins trois récipients (26) mis en place.

10. Procédé selon l'une des revendications précédentes, **caractérisé en ce que** les moyens d'entraînement séparés (20, 22) sont des servomoteurs.

11. Procédé selon l'une des revendications précédentes, **caractérisé en ce que** chaque étoile rotative (4, 6) effectue la même courbe de vitesse en déport dans le temps, la vitesse de chaque étoile rotative (4, 6) étant nulle lors de la réception et de la distribution du tampon.

12. Procédé selon l'une des revendications précédentes, **caractérisé en ce que** l'unité de transport de tampons (2) présente exactement deux étoiles rotatives (4, 6), qui présentent chacune exactement trois supports de tampons (8, 10, 12, 14, 16, 18) , et qu'uniquement le deuxième support central (10, 16) des trois supports de tampons de chaque étoile rotative (4, 6) est déplacé horizontalement en direction de sa position de distribution de tampon (B').

13. Procédé selon la revendication 12, **caractérisé en ce que**, dans la zone de la position de réception de tampons (A), l'écart angulaire entre le premier (8, 14) et le deuxième (10, 16) support de tampon d'une étoile rotative (4, 6) est inégal à l'écart annulaire entre le deuxième (10, 16) et le troisième (12, 16) support de tampon de l'étoile rotative (4, 6).
